# EUROPEAN PATENT SPECIFICATION

(11) **EP 3 683 503 B1**
(45) Date of publication and mention of the grant of the patent: **24.08.2022**
(21) Application number: 19211336.3
(22) Date of filing: 25.11.2019
(51) Int. Cl.: F23R 3/28, F02C 7/22

(54) **FUEL INJECTOR WITH LATTICE SUPPORTED DUAL COILED FUEL TUBES**
KRAFTSTOFFEINSPRITZDÜSE MIT GITTERGESTÜTZTEN DOPPELHELIX-RÖHREN
INJECTEUR DE CARBURANT AVEC TUBES À DOUBLE HÉLICE AVEC SUPPORT EN TREILLIS

(30) Priority: 15.01.2019 US 201916248235
(43) Date of publication of application: 22.07.2020
(73) Proprietor: Collins Engine Nozzles, Inc., West Des Moines, IA 50265 (US)
(72) Inventor: GREENFIELD, Jacob, Granger, IA Iowa 50109 (US); WILLIAMS, Brandon Phillip, Johnston, IA Iowa 50131 (US)
(74) Representative: Dehns

(56) References cited:
- US-A1- 2015 323 186
- US-A1- 2016 003 157
- US-A1- 2017 138 266
- US-A1- 2018 087 701
- US-A1- 2018 283 693
- US-A9- 2017 261 209

## Description

### Background

### Technological Field

The present disclosure relates to fuel injectors for a gas turbine and their support structure.

### Description of Related Art

A variety of devices are known in the art for injection and atomization of liquids. One exemplary application for such devices is in fuel injection for gas turbine engines. Typical fuel injectors include an inlet fitting where fuel is introduced into the injector from a fuel line or manifold. Many fuel injectors include a feed arm structure extending from the inlet fitting to a nozzle body, where fuel is issued from the injector into a combustor, typically as an atomized spray.

Thermal management and weight saving are two major aspects of a turbine fuel nozzle design. Passing cold fuel through a channel impacted by hot combustion environment requires a certain amount of stretch in the fuel tubes to accommodate the thermal growth. Coiled tubes are often expensive and difficult to manufacture repeatedly as well as difficult to incorporate with dual passages. Known injector designs typically rely on some form of metallic conduit or tube to deliver fuel from a supply manifold to a nozzle body or atomizing tip. For strength, thermal management, and aerodynamic purposes, fuel tubes are typically brazed or welded to larger supporting structures such as a feed arm and inlet fitting. A wide variety of configurations are known, including injectors with multiple fuel circuits, multiple air blast circuits, heat shielding, and the like.

The conventional methods and systems have generally been considered satisfactory for their intended purpose. However, there is still a need in the art for injectors and injector components having improved geometrical intricacy and reduced weight. There also remains a need in the art for such injectors and components that are economically viable. The present disclosure may provide a solution for at least one of these remaining challenges.

Injector structures are described in US 2018/238693 and US 2015/323186.

### Summary of the Invention

A fuel injector for a gas turbine engine is provided as defined by claim 1.

The three-dimensional elements of the lattice support structure wraps around both of the conduits at multiple locations, and the conduits are joined to the three-dimensional elements of the continuous lattice at multiple locations. Also, the lattice support structure can be mostly hollow. The conduits can form a double helix structure, for example angled at approximately a 45 degree angle with respect to the longitudinal axis.

The first conduit can have a larger diameter than the second conduit, and the three-dimensional elements of the continuous lattice can have a diameter smaller than the first conduit. The conduits can have wall thicknesses between 0.008 and 0.015 inches (0.2032 and 0.381 mm).

The conduits can be surrounded at least in part by an enclosure. The conduits can be joined to the enclosure at multiple locations, and the three-dimensional elements of the continuous lattice can also be joined to the enclosure at multiple locations. The conduits and enclosure can be surrounded at least in part by an exterior heat shield, which thermally insolates the conduits from external conditions. The enclosure can separated from the heat shield by a gap.

The lattice support structure can be configured to be a conduit for passing gaseous fuel from the inlet to the nozzle body. The conduits can merge into a single conduit at a first end or a second end. The feed arm can also include an integral mounting flange.

The lattice support structure can be of a material suitable for processing by at least one of: direct metal laser sintering, selective laser sintering, and electron beam melting. The feed arm can be can formed by an additive fabrication process.

These and other features of the systems and methods of the subject disclosure will become more readily apparent to those skilled in the art from the following detailed description of the preferred embodiments taken in conjunction with the drawings.

The lattice support structure can be of a material suitable for processing by at least one of: direct metal laser sintering, selective laser sintering, and electron beam melting. The feed arm can be can formed by an additive fabrication process.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject invention appertains will readily understand how to make and use the devices and methods of the subject invention without undue experimentation, preferred embodiments thereof will be described in detail herein below with reference to certain figures, wherein:
FIG. 1 is a perspective view of a fuel injector;
FIG. 2 is a cross-sectional side elevation view of FIG. 1, showing the lattice support structure; and
FIG. 3 is a cross-sectional perspective view of a portion of the fuel injector of FIG. 1, showing the fuel passages.

### Detailed Description

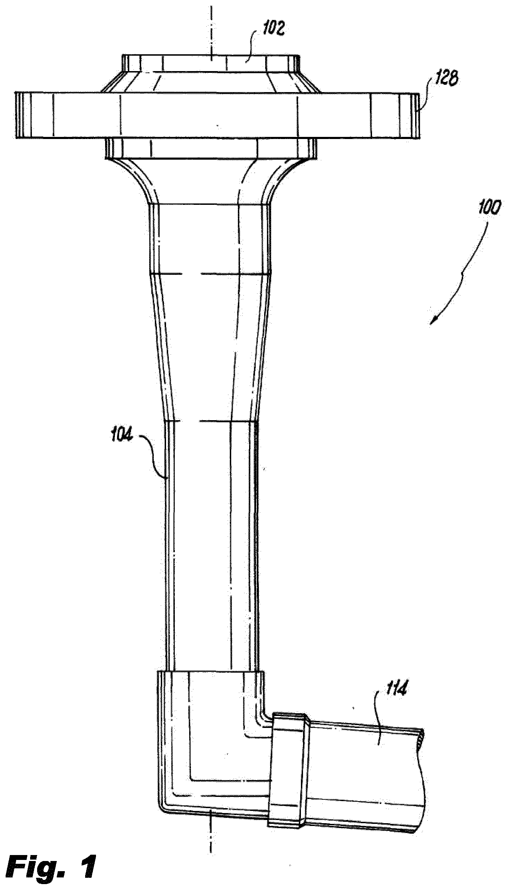

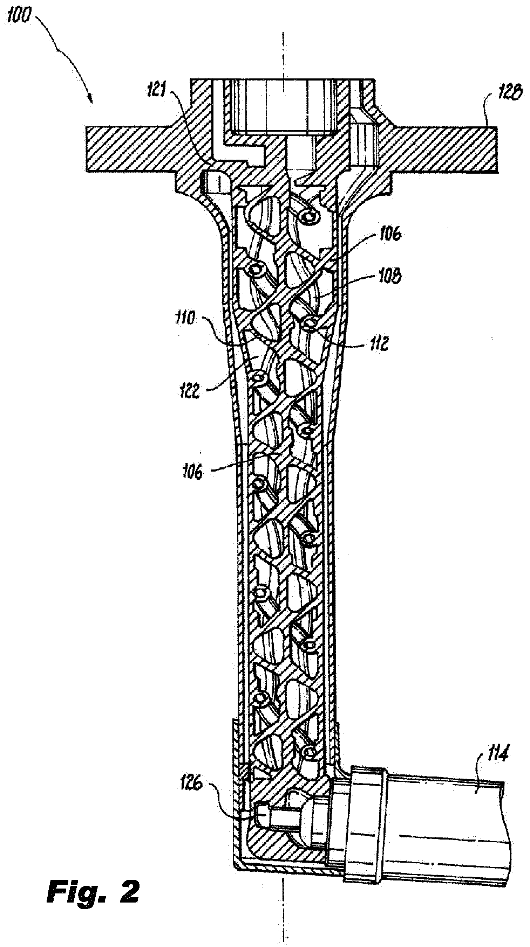

Reference will now be made to the drawings wherein like reference numerals identify similar structural features or aspects of the subject invention. For purposes of explanation and illustration, and not limitation, a partial view of an exemplary embodiment of a fuel injector in accordance with the invention is shown in FIG. 1 and is designated generally by reference character 100. Other embodiments of fuel injectors in accordance with the invention, or aspects thereof, are provided in FIGS. 2-3, as will be described. The methods and systems of the invention can be used to increase structural intricacy and to reduce weight in injectors and injector components.

Referring now to FIG. 1, a fuel injector device 100 for a gas turbine engine in accordance with the present disclosure is shown having a fuel inlet fitting 102 for receiving fuel, with a feed arm 104 mounted to the inlet 102. A nozzle body 114 is operatively connected to the feed arm 104 for injecting fuel from the conduits 110, 112 (shown in Fig. 2) into a combustor of the gas turbine engine. The feed arm 104 also includes an integral mounting flange 128.

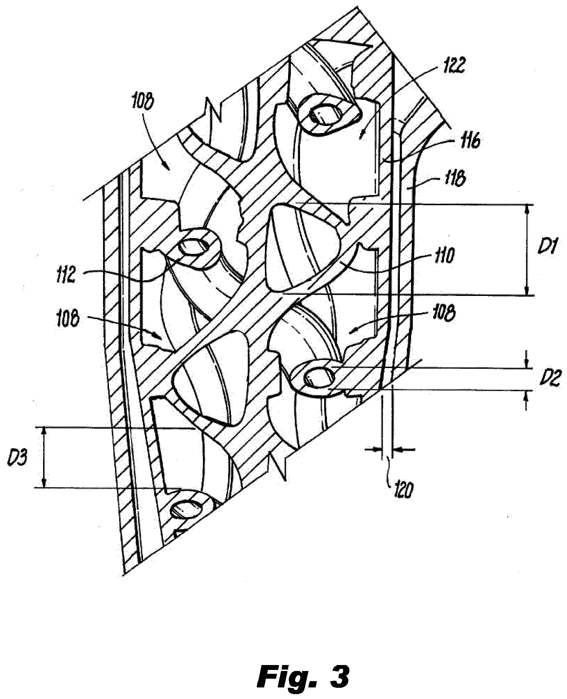

As shown in Figures 2 and 3, the feed arm 104 has a lattice support structure 106. The lattice support structure 106 includes a continuous lattice of three-dimensional elements 108, a first conduit 110, and a second conduit 112 in fluid communication with the inlet 102 for conveying fuel from the inlet fitting 102 through the feed arm 104. The conduits 110, 112 intertwine with each other. In one embodiment, a single inlet uses a valve to split to fuel to the two conduits 110, 112. In another embodiment, the inlet 102 uses two separate inlet fittings, each feeding one of the two conduits 110, 112. The lattice support structure 106 may be mostly hollow. Less material will be required during manufacturing of the injector than using conventional methods, resulting in cost and weight savings.

The three-dimensional elements 108 of the lattice support structure 106 wraps around both of the conduits 110, 112 at multiple locations, and the conduits 110, 112 are joined to the three-dimensional elements 108 of the continuous lattice 106 at multiple locations. The conduits 110, 112 form a double helix structure, for example angling at approximately a 45 degree angle with respect to the longitudinal axis, but can be adjusted based on thermal growth, strength, and envelope requirements. This angle could also be adjusted depending on the capability of the additive machine. The first conduit 110 is closer to the longitudinal axis, than the second conduit, wrapping around the longitudinal axis.

The first conduit 110 has a larger diameter (D1) than the diameter of (D2) second conduit 112, and the three-dimensional elements 108 of the continuous lattice 106 have a diameter (D3) smaller than the diameter (D1) of first conduit 110. The conduits 110, 112 have wall thicknesses between 0.008 to 0.015 inches (0.2032 and 0.381 mm). The first conduit 110 is to be made to accommodate a larger pressure than the second conduit 112. The first conduit 110 can be primary to the second conduit 112 for example for fuel staging. The conduits 110, 112 can have a cross-section that is a round shape, or can be "house shaped", elliptical, diamond shaped, or any other suitable shape to aid in manufacturability. The three-dimensional elements 108 can have similar shapes and can have similar sizes to the conduits 110,112. The three-dimensional-elements 108 can be connected to each other and to the conduits 110,112 in various locations. The three-dimensional elements 108 can be woven using any necessary pattern or can be placed strategically to increase resistance.

The conduits 110, 112 are surrounded at least in part by an enclosure 116. The conduits 110, 112 are joined to the enclosure 116 at multiple locations, and the three-dimensional elements 108 of the continuous lattice 106 are also be joined to the enclosure 116 at multiple locations. The conduits 110, 112 and enclosure 116 are surrounded at least in part by an exterior heat shield 118, which thermally insolates the conduits 110, 112 from external conditions. The enclosure 116 is separated from the heat shield 118 by a gap 120, helping to further isolate the conduits 110, 112 and fuel from thermal stresses. The enclosure 116 and heat shield 118 is attached to each other at a single location 121 near the inlet fitting 102.

The lattice support structure 106 can also optionally provide a conduit 122 configured for passing gaseous fuel from the inlet 102 to the nozzle body 114. The conduit 122 can be the negative space through the three-dimensional elements 108 of the continuous lattice 106, the first 110, and second conduit 112. The conduits 110, 112 can optionally merge into a single conduit at a first end 124 or a second end 126, allowing fuel to enter the nozzle body 114 as one stream. It is also contemplated that the conduits 110, 112 can remain separate through the nozzle body 114 until sprayed into the combustor.

The lattice support structure 106 can be of a material suitable for processing by direct metal laser sintering, selective laser sintering, and electron beam melting, or any other suitable process or combination of processes. The lattice support structure 106 can also be made of Inconel^{™} 25 of Huntington Alloys Corporation of Huntington, West Virginia. The feed arm 104 can be formed by an additive fabrication process.

## Claims

1. A fuel injector for a gas turbine engine comprising:
- an inlet (102) having a fuel inlet fitting for receiving fuel;
- a feed arm (104) mounted to the inlet;
- a first conduit (110) and a second conduit (112) in fluid communication with the inlet for conveying fuel from the inlet fitting through the feed arm, wherein the conduits are intertwined with each other; and
- a nozzle body (114) operatively connected to the feed arm for injecting fuel from the conduits into a combustor of a gas turbine engine;
**characterized in that**
the feed arm includes a lattice support structure (106), the lattice support structure including a plurality of three-dimensional elements (108);
wherein the three-dimensional elements (108) of the lattice support structure (106) wrap around both of the conduits (110, 112) at multiple locations; and
wherein the conduits (110, 112) are joined to the three-dimensional elements (108) of lattice support structure (106) at multiple locations.

2. A fuel injector as recited in claim 1, wherein the lattice support structure is continuous.

3. A fuel injector as recited in claim 1 or 2, wherein the lattice support structure includes hollow sections.

4. A fuel injector as recited in any preceding claim, wherein the conduits form a double helix structure.

5. A fuel injector as recited in any preceding claim, wherein the first conduit has a larger diameter than the diameter of the second conduit.

6. A fuel injector as recited in any preceding claim, wherein the three-dimensional elements of the continuous lattice have a diameter smaller than the diameter of the first conduit.

7. A fuel injector as recited in any preceding claim, wherein the conduits are surrounded at least in part by an enclosure (116).

8. The fuel injector as recited in claim 7, wherein the conduits are joined to the enclosure at multiple locations, and the three-dimensional elements of the continuous lattice are joined to the enclosure at multiple locations.

9. A fuel injector as recited in any preceding claim, wherein the lattice support structure provides a conduit configured for passing gaseous fuel from the inlet to the nozzle body.

10. A fuel injector as recited in any preceding claim, wherein the conduits are surrounded at least in part by an exterior heat shield (118), which thermally insolates the conduits from external conditions, and optionally, wherein the conduits are surrounded at least in part by an enclosure, the enclosure being separated from the heat shield by a gap, and the three-dimensional elements of the continuous lattice are joined to the enclosure at multiple locations.

11. A fuel injector as recited in any preceding claim, wherein the conduits merge into a single conduit at a first end or a second end.

12. A fuel injector as recited in any preceding claim, wherein the lattice support structure includes a material suitable for processing by at least one process selected from the group consisting of direct metal laser sintering, selective laser sintering, and electron beam melting.

13. A fuel injector as recited in any preceding claim, wherein the feed arm includes an integral mounting flange., and/or wherein the feed arm is formed by an additive fabrication process.

## Patentansprüche

1. Kraftstoffeinspritzvorrichtung für ein Gasturbinentriebwerk, die Folgendes umfasst:
- einen Einlass (102), der ein Kraftstoffeinlassverbindungsstück zum Aufnehmen von Kraftstoff aufweist;
- einen Zuführarm (104), der an dem Einlass montiert ist;
- eine erste Leitung (110) und eine zweite Leitung (112) in Fluidverbindung mit dem Einlass zum Transportieren von Kraftstoff von dem Einlassverbindungsstück durch den Zuführarm, wobei die Leitungen miteinander verflochten sind; und
- einen Düsenkörper (114), der mit dem Zuführarm wirkverbunden ist, um Kraftstoff aus den Leitungen in eine Brennkammer eines Gasturbinentriebwerks einzuspritzen;
**dadurch gekennzeichnet, dass**
der Zuführarm eine Gitterstützstruktur (106) beinhaltet, wobei die Gitterstützstruktur eine Vielzahl von dreidimensionalen Elementen (108) beinhaltet;
wobei die dreidimensionalen Elemente (108) der Gitterstützstruktur (106) beide Leitungen (110, 112) an mehreren Stellen umwickeln; und
wobei die Leitungen (110, 112) an mehreren Stellen mit den dreidimensionalen Elementen (108) der Gitterstützstruktur (106) verbunden sind.

2. Kraftstoffeinspritzvorrichtung nach Anspruch 1, wobei die Gitterstützstruktur durchgehend ist.

3. Kraftstoffeinspritzvorrichtung nach Anspruch 1 oder 2, wobei die Gitterstützstruktur hohle Bereiche beinhaltet.

4. Kraftstoffeinspritzvorrichtung nach einem vorstehenden Anspruch, wobei die Leitungen eine Doppelhelixstruktur bilden.

5. Kraftstoffeinspritzvorrichtung nach einem vorstehenden Anspruch, wobei die erste Leitung einen Durchmesser aufweist, der größer als der Durchmesser der zweiten Leitung ist.

6. Kraftstoffeinspritzvorrichtung nach einem vorstehenden Anspruch, wobei die dreidimensionalen Elemente des durchgehenden Gitters einen Durchmesser aufweisen, der kleiner als der Durchmesser der ersten Leitung ist.

7. Kraftstoffeinspritzvorrichtung nach einem vorstehenden Anspruch, wobei die Leitungen mindestens teilweise von einer Umhüllung (116) umgeben sind.

8. Kraftstoffeinspritzvorrichtung nach Anspruch 7, wobei die Leitungen an mehreren Stellen mit der Umhüllung verbunden sind und die dreidimensionalen Elemente des durchgehenden Gitters an mehreren Stellen mit der Umhüllung verbunden sind.

9. Kraftstoffeinspritzvorrichtung nach einem vorstehenden Anspruch, wobei die Gitterstützstruktur eine Leitung bereitstellt, die dazu konfiguriert ist, gasförmigen Kraftstoff von dem Einlass zu dem Düsenkörper zu leiten.

10. Kraftstoffeinspritzvorrichtung nach einem vorstehenden Anspruch, wobei die Leitungen mindestens teilweise von einem Außenhitzeschild (118) umgeben sind, das die Leitungen von äußeren Bedingungen thermisch isoliert, und optional wobei die Leitungen mindestens teilweise von einer Umhüllung umgeben sind, wobei die Umhüllung durch einen Spalt von dem Hitzeschild getrennt ist und die dreidimensionalen Elemente des durchgehenden Gitters an mehreren Stellen mit der Umhüllung verbunden sind.

11. Kraftstoffeinspritzvorrichtung nach einem vorstehenden Anspruch, wobei die Leitungen an einem ersten Ende oder einem zweiten Ende in eine einzige Leitung zusammenlaufen.

12. Kraftstoffeinspritzvorrichtung nach einem vorstehenden Anspruch, wobei die Gitterstützstruktur ein Material beinhaltet, das zum Verarbeiten durch mindestens einen Prozess geeignet ist, der aus der Gruppe ausgewählt ist, die aus direktem Metall-Lasersintern, selektivem Lasersintern und Elektronenstrahlschmelzen besteht.

13. Kraftstoffeinspritzvorrichtung nach einem vorstehenden Anspruch, wobei der Zuführarm einen integralen Montageflansch beinhaltet und/oder wobei der Zuführarm durch einen additiven Herstellungsprozess gebildet ist.

## Revendications

1. Injecteur de carburant pour un moteur à turbine à gaz comprenant :
- une entrée (102) ayant un raccord d'entrée de carburant pour recevoir du carburant ;
- un bras d'alimentation (104) monté sur l'entrée ;
- un premier conduit (110) et un second conduit (112) en communication fluidique avec l'entrée pour transporter le carburant depuis le raccord d'entrée à travers le bras d'alimentation, dans lequel les conduits sont entrelacés l'un avec l'autre ; et
- un corps de buse (114) connecté de manière fonctionnelle au bras d'alimentation pour injecter du carburant depuis les conduits dans une chambre de combustion d'un moteur à turbine à gaz ;
**caractérisé en ce que**
le bras d'alimentation comporte une structure de support en treillis (106), la structure de support en treillis comportant une pluralité d'éléments tridimensionnels (108) ;
dans lequel les éléments tridimensionnels (108) de la structure de support en treillis (106) s'enroulent autour des deux conduits (110, 112) à de multiples emplacements ; et
dans lequel les conduits (110, 112) sont reliés aux éléments tridimensionnels (108) de la structure de support en treillis (106) au niveau de multiples emplacements.

2. Injecteur de carburant selon la revendication 1, dans lequel la structure de support en treillis est continue.

3. Injecteur de carburant selon la revendication 1 ou 2, dans lequel la structure de support en treillis comporte des sections creuses.

4. Injecteur de carburant selon une quelconque revendication précédente, dans lequel les conduits forment une structure à double hélice.

5. Injecteur de carburant selon une quelconque revendication précédente, dans lequel le premier conduit a un diamètre supérieur au diamètre du second conduit.

6. Injecteur de carburant selon une quelconque revendication précédente, dans lequel les éléments tridimensionnels du réseau continu ont un diamètre inférieur au diamètre du premier conduit.

7. Injecteur de carburant selon une quelconque revendication précédente, dans lequel les conduits sont entourés au moins en partie par une enceinte (116).

8. Injecteur de carburant selon la revendication 7, dans lequel les conduits sont reliés à l'enceinte au niveau de multiples emplacements, et les éléments tridimensionnels du réseau continu sont reliés à l'enceinte au niveau de multiples emplacements.

9. Injecteur de carburant selon une quelconque revendication précédente, dans lequel la structure de support en treillis fournit un conduit configuré pour faire passer le carburant gazeux de l'entrée au corps de buse.

10. Injecteur de carburant selon une quelconque revendication précédente, dans lequel les conduits sont entourés au moins en partie par un écran thermique extérieur (118), qui isole thermiquement les conduits des conditions externes, et éventuellement, dans lequel les conduits sont entourés au moins en partie par une enceinte, l'enceinte étant séparée de l'écran thermique par un espace, et les éléments tridimensionnels du treillis continu sont reliés à l'enceinte au niveau de multiples emplacements.

11. Injecteur de carburant selon une quelconque revendication précédente, dans lequel les conduits fusionnent en un seul conduit au niveau d'une première extrémité ou d'une seconde extrémité.

12. Injecteur de carburant selon une quelconque revendication précédente, dans lequel la structure de support en treillis comporte un matériau approprié pour un traitement par au moins un processus choisi dans le groupe constitué d'un frittage laser direct de métal, d'un frittage laser sélectif et d'une fusion par faisceau d'électrons.

13. Injecteur de carburant selon une quelconque revendication précédente, dans lequel le bras d'alimentation comporte une bride de montage intégrale, et/ou dans lequel le bras d'alimentation est formé par un processus de fabrication additive.
